# EUROPÄISCHE PATENTANMELDUNG

(11) **EP 1 148 335 A1**
(43) Veröffentlichungstag der Anmeldung: **24.10.2001**
(21) Anmeldenummer: 01250087.2
(22) Anmeldetag: 14.03.2001
(51) Int. Cl.: G01N 29/24, G01N 29/22, B06B 1/06

(54) **US-Prüfvorrichtung**

(30) Priorität: 20.03.2000 DE 10014936
(71) Anmelder: V & M Deutschland GmbH, 40472 Düsseldorf (DE)
(72) Erfinder: Haacke, Harri, 40880 Ratingen (DE); Bäthmann, Hans-J., 47447 Moers (DE); Nitsche, Stefan, 45473 Mülheim (DE)
(74) Vertreter: Meissner, Peter E., Dipl.-Ing.

(57) **Zusammenfassung**

Die Erfindung betrifft eine US-Prüfvorrichtung (1) zur zerstörungsfreien Fehlerprüfung nach der Impuls-Echo-Methode eines relativ dazu sich bewegenden Werkstückes (4) mit Ankopplung mittels eines Fließmediums zwischen einem Ultraschallschwinger eines Prüfkopfes und der Werkstückoberfläche bestehend aus einem Prüfkopfträger (2) an dem mehrere Ultraschallschwinger mit unterschiedlichen Einschallrichtungen so angeordnet sind, dass zur Bildung eines gemeinsamen Prüfortes deren Schallstrahlachsen sich im Bereich des Werkstückes in einem Punkt schneiden. Dabei bilden die Ultraschallschwinger (6), elektrisch getrennt voneinander eine geschlossene ringförmige Fläche, die auf einer Mantelfläche eines Kegels liegt, dessen Spitze dem Werkstück (4) abgewandt ist, wobei die Kegelneigung und die Position auf der Mantelfläche so gewählt sind, dass die orthogonal auf den Ultraschallschwingern (6) stehenden Schallstrahlachsen (8) sich im Bereich des Werkstückes (4) in einem Punkt (10) schneiden und die Ultraschallschwinger (6) verschachtelt getaktet betrieben werden.

## Beschreibung

Die Erfindung betrifft eine US-Prüfvorrichtung zur zerstörungsfreien Prüfung nach der Impuls-Methode eines relativ dazu sich bewegenden Werkstückes mit Ankoppelung mittels eines Fließmediums zwischen einem Ultraschallschwinger eines Prüfkopfes und der Werkstückoberfläche gemäß dem Oberbegriff des Patentanspruches 1.

Eine gattungsbildende US-Prüfvorrichtung ist aus der EP 0 543 870 B1 bekannt. Diese besteht aus einem Prüfkopfträger, an dem mindestens zwei Prüfköpfe angeordnet sind, deren Schallstrahlachsen sich im Bereich des Werkstückes in einem Punkt schneiden und einer für alle Prüfköpfe gemeinsam das Fließmedium führenden, die Vorlaufstrecke bildenden Kammer, die eine der Werkstückoberfläche zugewandte Austrittsöffnung aufweist, und mit dem Prüfkopfträger verbunden ist. Jedem separaten Prüfkopf ist eine über eine bestimmte Länge der gemeinsamen Kammer, sich erstreckende, einen Kanal bildende separat geführte Vorlaufstrecke zugeordnet, deren Achse mit der jeweiligen Schallstrahlachse fluchtet.

Nachteilig bei dieser Anordnung ist, daß die separate einzelne Anordnung der Prüfköpfe zu einem großen Bauvolumen führt, was wiederum eine große bewegte Masse bedeutet, die die Führung beispielsweise an Rohren verschlechtert. Außerdem ist aus den vorgenannten Gründen auch die maximal anordnenbare Anzahl von Prüfköpfen beschränkt, so daß bestimmte Winkellagen nicht mit der höchstmöglichen Intensität geprüft werden können.

In der JP 6281634 ist ein Ultraschallprüfkopf offenbart mit US-Schwingern in Form zweier konzentrischer Ringe, die auf der dem zu prüfenden Werkstück zugewandten Innenfläche des Prüfkopfes angeordnet sind. Über Laufzeitmessung sollen mit dieser Anordnung elastische Eigenschaften des Werkstückes ermittelt werden. Die Schallstrahlen des inneren Ringes werden auf einen Punkt im Abstand r1 und die Schallstrahlen des weiter außen liegenden Ringes auf einen Punkt im Abstand r2 fokussiert, wobei r2 < r1 ist.

Aufgabe der Erfindung ist es, eine US-Prüfvorrichtung zur zerstörungsfreien Fehlerprüfung nach der Impuls-Echo-Methode eines relativ dazu sich bewegenden Werkstückes anzugeben, das die zuvor geschilderten Nachteile nicht aufweist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung bilden die elektrisch getrennt voneinander angeordneten Ultraschallschwinger eine geschlossene ringförmige Fläche, die auf einer Mantelfläche eines Kegels liegt, dessen Spitze dem Werkstück abgewandt ist. Die Position auf der Mantelfläche und die Kegelneigung wird so gewählt, daß die orthogonal auf den Ultraschallschwingem stehenden Schallstrahlachsen sich im Bereich der Werkstückoberfläche in einem Punkt schneiden.

Die vorgeschlagene Anordnung hat den Vorteil, daß bei gleicher Anzahl von Ultraschallschwingern durch die Abkopplung von den Prüfköpfen diese enger zusammenrücken können, so daß die gesamte Prüfvorrichtung bauvolumenmäßig kleiner ausgeführt werden kann. Außerdem kann der Ring in eine noch größere Anzahl von einzelnen Ultraschallschwingern unterteilt werden, so daß auch Fehlstellen im Werkstück, deren Winkellage für die bekannte US-Prüfvorrichtung ungünstig liegen, nachgewiesen werden können.

Da die Ultraschallschwinger verschachtelt getaktet betrieben werden, können Fehlstellen mit praktisch beliebigen Winkellagen mit höchster Intensität geprüft werden.

Die Art der Herstellung eines solchen Ultraschallwandlers ist verschieden. Entweder er wird aus einem Stück Piezokeramik oder in Composite- oder Folientechnik hergestellt. Die Entscheidung darüber ist ein Kosten-Nutzen-Problem. Beispielsweise ist von der Wirkungsweise her die einstückige Herstellungsart die günstigste, aber auch die teuerste Lösung. Umgekehrt ist die Folientechnik herstellungsmäßig günstig, aber der Verlust an auswertbarer Ultraschallenergie nicht unerheblich.

In der Zeichnung wird anhand einiger Darstellungen die erfindungsgemäß ausgebildete US-Prüfvorrichtung näher erläutert. Es zeigen:
- Fig. 1: einen Querschnitt durch eine Prinzipdarstellung einer erfindungsgemäß ausgebildeten US-Prüfvorrichtung,
- Fig. 2 a-c: eine Draufsicht (a) und einen Schnitt (b) sowie eine dreidimensionale Darstellung (c) eines erfindungsgemäß ausgebildeten Ultraschallschwingerringes,
- Fig. 3a, b: wie Figur 2, jedoch mit der doppelten Anzahl von Ultraschallschwingern,
- Fig. 4: Prinzipdarstellung einer bekannten US-Prüfvorrichtung
- Fig. 5: wie Figur 1, aber als Vergleich zu Figur 4
- Fig. 6, 7: Darstellung der Möglichkeit einer Reduzierung der Baugröße

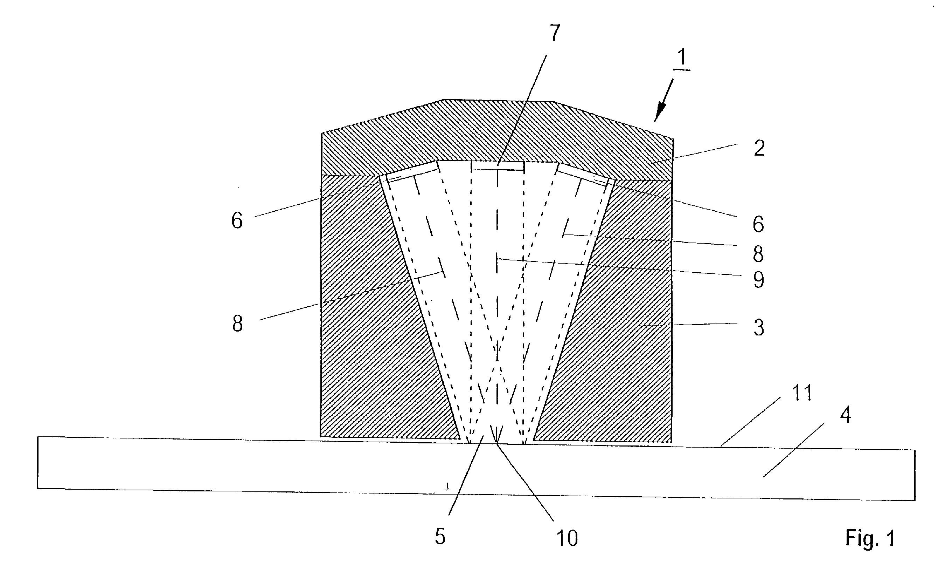

Figur 1 zeigt im Querschnitt als Prinzipdarstellung eine erfindungsgemäß ausgebildete US-Prüfvorrichtung 1. Sie besteht aus einem Prüfkopfträger 2 und einer damit verbundenen, die Vorlaufstrecke und das Fließmedium führenden Kammer 3. Diese Kammer 3 ist auf der dem zu prüfenden Werkstück 4 zugewandten Seite mit einer Austrittsöffnung 5 versehen. Die Ultraschallschwinger 6 bilden einen auf einer Mantelfläche eines Kegels liegenden geschlossenen Ring. Die Einzelheiten der Zuführungen der elektrischen Energie für die Ultraschallschwinger sowie die Darstellung der Anschlüsse für das Fließmedium wurden der Einfachheit halber hier weggelassen. Der in der Mitte angeordnete Ultraschallschwinger 7 ist für die Dopplungsprüfung und Wanddickenprüfung gedacht. Die Schallstrahlachsen 8, 9 schneiden sich in dieser Darstellung in einem Punkt 10 genau auf der Oberfläche 11 des Werkstückes 4. Für bestimmte Prüfzwecke kann es von Vorteil sein, wenn der Schnittpunkt 10 etwas unterhalb der Oberfläche 11 mehr im Inneren des Werkstückes 4 liegt.

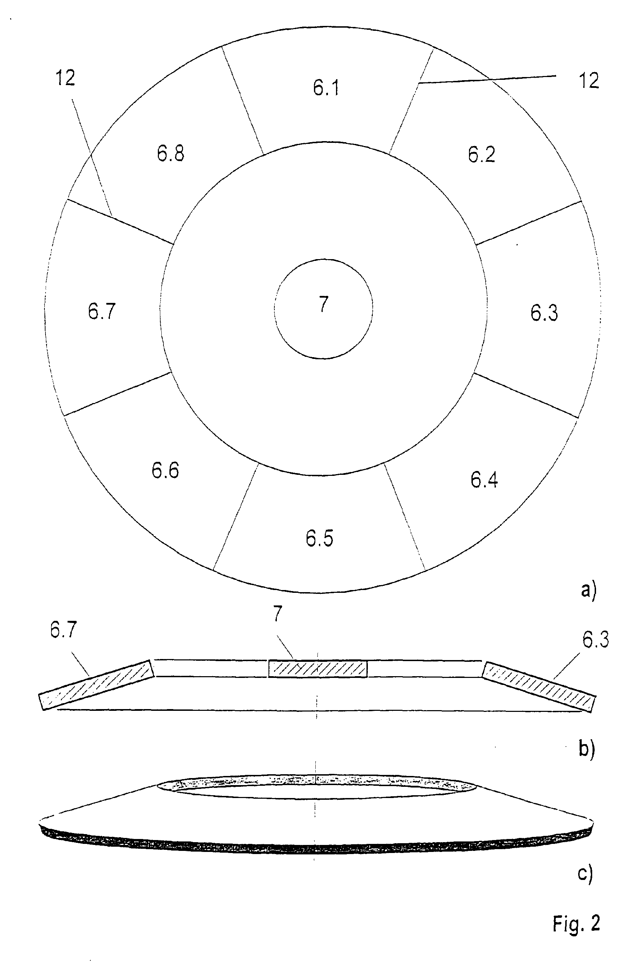

In Figur 2 ist in einer Draufsicht und in einem Schnitt der erfindungsgemäß ausgebildete Ultraschallschwingerring dargestellt. Die hier insgesamt acht Ultraschallschwinger 6.1-6.8 sind elektrisch getrennt voneinander angeordnet, wobei die Trennung durch eine Grenzlinie 12 zwischen zwei benachbart liegenden Ultraschallschwingern 6.1, 6.2 kenntlich gemacht wurde. In dieser Darstellung ist deutlich zu erkennen, daß der Ultraschallschwingerring auf einer Mantelfläche eines sehr flachen Kegels liegt, dessen Spitze dem zu prüfenden Werkstück 4 abgewandt ist. Noch deutlicher ist die Kegelstruktur des vorgeschlagenen Ultraschallschwingerringes in einer dreidimensionalen Darstellung zu erkennen (Figur 2c). Der in der Mitte angeordnete Ultraschallschwinger 7 wurde bei dieser Darstellung weggelassen.

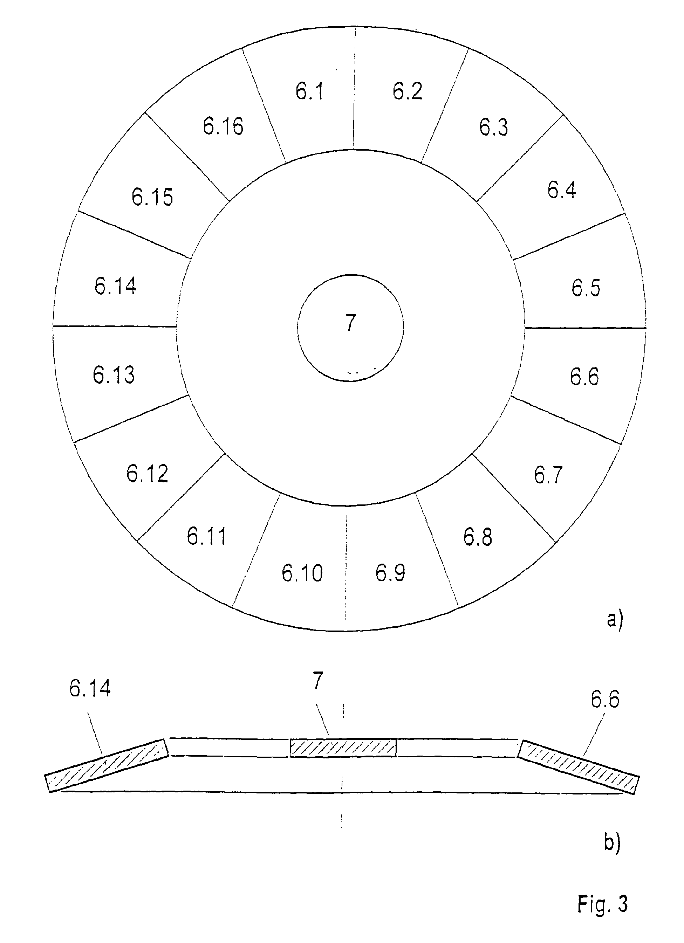

Figur 3 zeigt in einer vergleichbaren Darstellung wie Figur 2 einen Ultraschallschwingerring mit der doppelten Anzahl von Ultraschallschwingern 6.1-6.16. Eine weitere Unterteilung ist theoretisch möglich, stößt aber an praktische Grenzen, da zum einen die verbleibende Fläche für den einzelnen Ultraschallschwinger 6.x zu klein und der Anschluß- und Verdrahtungsaufwand sowie der elektronische Aufwand für die Steuerung zu groß wird.

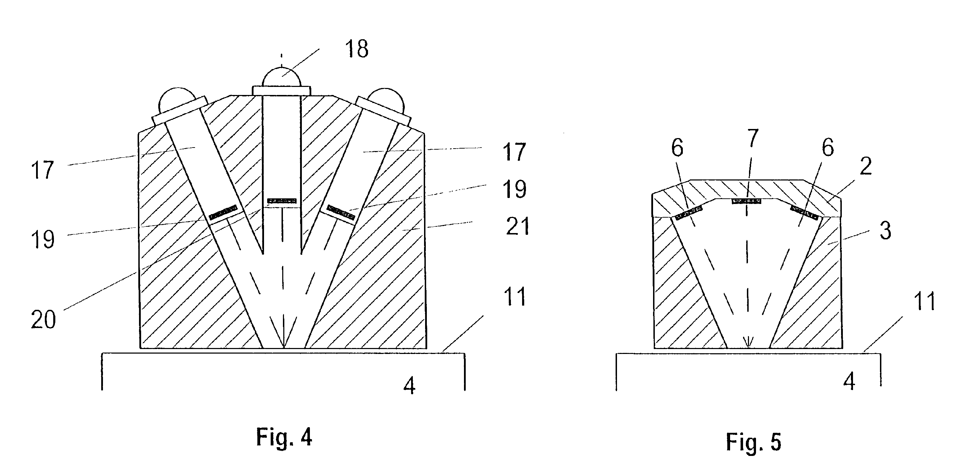

Figuren 4 und 5 zeigen in einer Gegenüberstellung den Einfluß der jeweiligen Anordnung in Bezug auf die Baugröße für die US-Prüfvorrichtung. Figur 4 zeigt schematisch etwa die Verhältnisse der bekannten US-Prüfvorrichtung mit diskreten Prüfköpfen (17,18). Da die eigentlichen Schwinger (19,20) in dem sie umgebenden Prüfkopfgehäuse (21) stecken und wegen der üblichen längsschaftigen Bauform der Prüfköpfe (17,18) ist ein großes Bauvolumen der gesamten Vorrichtung erforderlich. Ein dichteres Zusammenrücken ist wegen der Größe der Prüfköpfe (17,18) nicht möglich. Werden dagegen erfindungsgemäß die einzelnen Ultraschallschwinger (6) zu einem Ring zusammengefaßt, so kann gemäß Figur 5 das Bauvolumen insgesamt deutlich verringert werden.

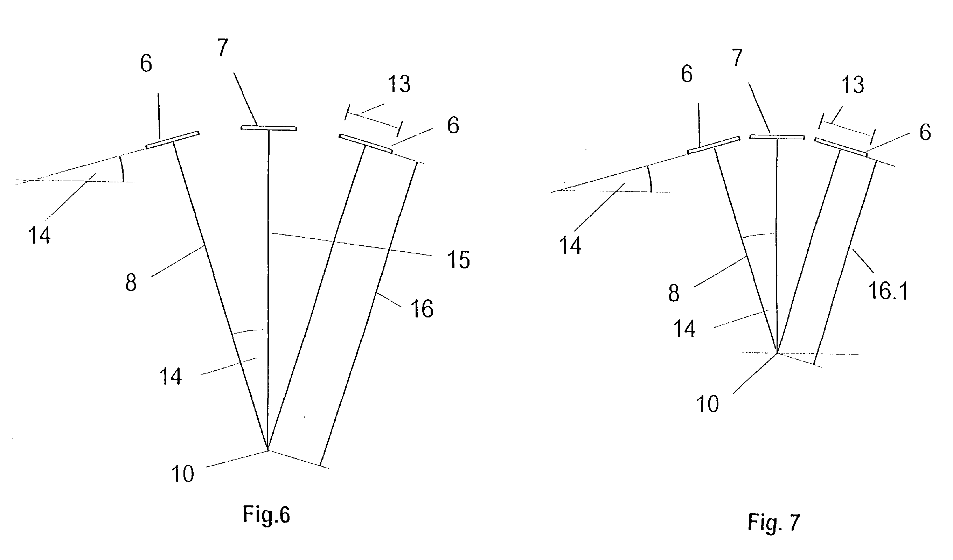

In den Figuren 6 und 7 wird die Möglichkeit einer weiteren Reduzierung der Baugröße der US-Prüfvorrichtung erläutert. In Anlehnung an die bekannte US-Prüfvorrichtung soll die Breite 13 des Schwingerringes 15 mm betragen. Der eingeschlossene Winkel 14 zwischen der Senkrechten 15 und der Strahlachse 8 liegt bei etwa 17°. Der Abstand 16 vom jeweiligen Ultraschallschwinger 6 bis zum Schnittpunkt 10 soll 90 mm betragen. Ein dichteres Zusammenrücken ist möglich, wenn wie in Figur 7 dargestellt, die Wasservorlaufstrecke (Abstand 16.1) auf 60 mm reduziert wird. Ein weiteres Zusammenrücken wird durch die Ausdehnung des in der Mitte angeordneten Ultraschallschwingers 7 (für Wanddicken-, Dopplungsprüfung) begrenzt.

Bezüglich der Anordnung gemäß Figur 2 könnte das Taktschema wie folgt aussehen, wobei die verwendeten Abkürzungen die folgende Bedeutung haben:
LF = Prüfung auf Längsfehler
SF = Prüfung auf Schrägfehler
QF = Prüfung auf Querfehler
WD = Prüfung der Wanddicke
DO = Prüfung auf Dopplungsfehler

| Fehlertyp | LF | SF | QF | SF | WD/DO |
|---|---|---|---|---|---|
| Takt 1 | 6.1 | 6.2 | 6.3 | 6.4 | 7 |
| Takt 2 | 6.5 | 6.6 | 6.7 | 6.8 | |

In der Beschreibung der Erfindung ist darauf hingewiesen worden, daß es vorteilhaft ist, die einzelnen Ultraschallschwinger (6) verschachtelt getaktet zu betreiben.

Bei einer Anordnung gemäß Figur 3 ergibt sich dann bei einer Verdoppelung der Ultraschallschwinger ein verschachteltes Taktschema:

| Fehlertyp | LF | SF | | | | | | QF | WD/DO |
|---|---|---|---|---|---|---|---|---|---|
| Fehlerlage | 0° | 22.5° | 45° | 67.3° | -22.5° | -45° | -67.5° | 90° | |
| Takt 1 | 6.1+6.2 | | 6.7+6.8 | | | 6.3+6.4 | | 6.5+6.5 | 7 |
| Takt 2 | | 6.8+6.9 | | 6.6+6.7 | 6.2+6.3 | | 6.4+6.5 | | - |
| Takt 3 | 6.9+6.10 | | 6.15+6.16 | | | 6.11+6.12 | | 6.13+6.14 | 7 |
| Takt 4 | | 6.1+6.16 | | 6.14+6.15 | 6.10+6.11 | | 6.12+6.13 | | - |

## Patentansprüche

1. US-Prüfvorrichtung zur zerstörungsfreien Fehlerprüfung nach der Impuls-Echo-Methode eines relativ dazu sich bewegenden Werkstückes mit Ankopplung mittels eines Fließmediums zwischen einem Ultraschallschwinger eines Prüfkopfes und der Werkstückoberfläche bestehend aus einem Prüfkopfträger an dem mehrere Ultraschallschwinger mit unterschiedlichen Einschallrichtungen so angeordnet sind, dass zur Bildung eines gemeinsamen Prüfortes deren Schallstrahlachsen sich im Bereich des Werkstückes in einem Punkt schneiden
**dadurch gekennzeichnet,**
**dass** die Ultraschallschwinger (6), elektrisch getrennt voneinander eine geschlossene ringförmige Fläche bilden, die auf einer Mantelfläche eines Kegels liegt, dessen Spitze dem Werkstück (4) abgewandt ist, wobei die Kegelneigung und die Position auf der Mantelfläche so gewählt sind, dass die orthogonal auf den Ultraschallschwingern (6) stehenden Schallstrahlachsen (8) sich im Bereich des Werkstückes (4) in einem Punkt (10) schneiden und die Ultraschallschwinger (6) verschachtelt getaktet betrieben werden.

2. US-Prüfvorrichtung nach Anspruch 1,
**dadurch gekennzeichnet,**
**daß** der Ultraschallschwingerring ein Stück einer Piezokeramik ist.

3. US-Prüfvorrichtung nach Anspruch 1,
**dadurch gekennzeichnet,**
**daß** der Ultraschallschwingerring ein Stück eines Piezomaterial in Compositetechnik ist.

4. US-Prüfvorrichtung nach Anspruch 1,
**dadurch gekennzeichnet,**
**daß** der Ultraschallschwingerring ein Stück eines Piezomaterials in Folientechnik ist.

5. US-Prüfvorrichtung nach einem der Ansprüche 1 bis 4,
**dadurch gekennzeichnet,**
**daß** der eingeschlossene Winkel zwischen der Senkrechten (15) und der Schallstrahlachse (8) 17° +- 1° beträgt.
